Europäisches Patentamt

European Patent Office

Office européen des brevets

(11) Veröffentlichungsnummer: **0 331 002**
**A2**

## (12) EUROPÄISCHE PATENTANMELDUNG

(21) Anmeldenummer: 89103150.2

(22) Anmeldetag: 23.02.89

(51) Int. Cl.⁴: **C09J 3/14** , **C08F 291/02**

(30) Priorität: 03.03.88 DE 3806853

(43) Veröffentlichungstag der Anmeldung:
06.09.89 Patentblatt 89/36

(84) Benannte Vertragsstaaten:
**CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Dittrich, Uwe, Dr.**
**Pfalzgrafenstrasse 21**
**D-6700 Ludwigshafen(DE)**

(54) **Reaktivklebstoffsystem.**

(57) Diese Erfindung betrifft radikalisch härtbare Reaktivklebstoffe auf Basis von olefinisch ungesättigten Monomeren, darin löslichen oder dispergierbaren kautschukelastischen Polymerisaten und radikalbildenden Polymerisationsinitiatoren, die einen Gehalt an Mikroglaskugeln, die an ihrer Oberfläche durch organische reaktive Gruppen modifiziert sind, aufweisen.

EP 0 331 002 A2

## Reaktivklebstoffsystem

Diese Erfindung betrifft radikalisch härtbare Reaktivklebstoffe auf Basis von olefinisch ungesättigten Monomeren, deren Klebeigenschaften durch einen Gehalt an Mikroglaskugeln verbessert sind, die an ihrer Oberfläche durch organische reaktive Gruppen modifiziert sind.

Radikalisch härtende Reaktivklebstoffe auf Basis von olefinisch ungesättigten Monomeren, darin löslichen oder dispergierbaren kautschukelastischen Polymerisaten und radikalbildenden Polymerisationsinitiatoren sind beispielsweise aus der US-PS 4 451 615 und der EP-PS 0 034 046 bekannt. Als olefinisch ungesättigte Monomere enthalten sie meist überwiegende Mengen monoolefinisch ungesättigte Carbonsäureester von der Art der (Meth)acrylsäureester von 1 bis 12 C-Atome enthaltenden Alkanolen und Di-, Tri- und Tetraacrylaten mehrwertiger Alkohole sowie in Mengen bis zu 60 Gew.%, meist bis zu 30 Gew.% der gesamten olefinisch ungesättigten Monomeren, vinylaromatische Verbindungen besonders Styrol und/oder (Meth)acrylnitril sowie in Mengen von meist bis zu 50 Gew.% 3 bis 5 C-Atome aufweisende monoolefinisch ungesättigten Mono- und/oder Dicarbonsäuren, wie besonders Acrylsäure, Methacrylsäure und Itaconcarbonsäure oder Maleinsäure, sowie deren Amide, wie besonders Acrylamid und Methacrylamid einpolymerisiert. Die geeigneten Ester der Acryl- und (Meth)acrylsäure sind besonders n-Butylacrylat und -methacrylat, Isobutylacrylat und -methacrylat, sowie 2-Ethylexyl-acrylat und -methacrylat, ferner die Methyl-, Ethyl-, Propyl-, n-Hexyl- und n-Octylester der Acryl- und Methacrylsäure, sowie Tetramethylenglykol(meth)acrylat, Ethylenglykoldi(meth)acrylat oder Trimethylolpropantri(meth)acrylat. Geeignete Vinylester sind besonders Vinyacetat und Vinylpropionat sowie ferner Vinylbutyrat, Vinylversatat und Vinyllaurat. Geeignet ist ferner Divinylbenzol.

Als kautschukelastische Polymerisate kommen z.B. Naturkautschuk, Copolymerisate des Butadiens mit Styrol und/oder Acrylnitril, die meist 40 bis 90 Gew.% Butadien und gegebenenfalls bis zu etwa 5 Gew.% 3 bis 5 C-Atome enthaltende monoolefinisch ungesättigte Mono- und/oder Dicarbonsäuren der obengenannten Art einpolymerisiert enthalten, sowie ferner Polyacrylate, chlorsulfiniertes Polyethylen, Nitrilkautschuke, elastomere Polyurethane und kautschukelastische Ethylen-, Propylen-Copolymerisate in Frage. Der Anteil an derartigen kautschukelastischen Polymerisaten an den Reaktivklebstoffen beträgt meist 5 bis 50, insbesondere 5 bis 20 Gew.%, bezogen auf den Anteil der monoolefinisch ungesättigten Monomeren.

Als radikalbildende Polymerisations-Initiatoren enthalten die bekannten radikalisch härtbaren Reaktivklebstoffe meist organische Peroxyde und/oder organische Hydroperoxyde der Art des Dibenzoylperoxids oder Cumylhydroperoxids sowie reduzierende Komponenten wie Amine oder Übergangsmetallsalze. Die Polymerisationsinitiatoren dieser Art können in Reaktivklebstoffen bekanntlich vor deren Applikation auf mit den übrigen Bestandteilen gemischt werden oder aber getrennt für sich als Primer in dünner Schicht auf die zu verklebenden Teile (No Mix-Systeme) aufgetragen werden.

Derartige radikalisch härtbare Reaktivklebstoffe können zum Verkleben auch unterschiedlicher Oberflächen eingesetzt werden. Sie härten, insbesondere auch bei Raumtemperatur rasch aus, zeigen gute Flexibilität in ausgehärteten Zustand sowie hohe Zugscherfestigkeit und gute Beständigkeit über weite Temperaturbereiche. Außerdem können sie lange gelagert werden.

Es ist auch, beispielsweise aus der EP-PS 0 114 116 bekannt, Reaktivklebstoffe der genannten Art, Füllstoffe z.B. Metallpulver, Titandioxid, Calciumcarbonat, Kieselgel, Asbest- und Glasfasern zuzusetzen. Derartige Füllstoffe dienen der Verbesserung der termischen Leitfähigkeit und Bindefestigkeit (EP-PS 0 114 116), zur Viskositätssteuerung (japan. Patentanmeldung 79/21 234) und zur Festlegung der Klebefugenstärke. Schließlich ist es aus der japan. Patentanmeldung 57/141 470 bekannt, Reaktivklebstoffen zur Optimierung der Licht-initierten Härtung, Glaskugeln zuzusetzen.

Es wurde nun gefunden, daß radikalisch härtbare Reaktivklebstoffe auf Basis von olefinisch ungesättigten Monomeren, darin löslichen oder dispergierbaren kautschukelastischen Polymerisaten und radikalbildenden Polymerisationsinitiatoren Verklebungen mit besonders guten Eigenschaften ergeben, wenn sie einen Gehalt an Mikroglaskugeln aufweisen, die an ihrer Oberfläche durch organische reaktive Gruppen modifiziert sind. Als reaktive Gruppen kommen dabei vorzugsweise Amino-Gruppen, Epoxy-Gruppen und Meth(acrylat)-Gruppen in Frage, sowie ferner Carboxyl-, Hydroxil- und Thiol-Gruppen, wobei die Carboxyl-, Hydroxil- und Thiol-Gruppen auch zusammen mit (Meth)acrylat-Gruppen als die Oberfläche modifizierende reaktive Gruppen vorliegen können. Mikroglaskugeln die derart modifizierte Oberflächen aufweisen, haben meist mittlere Durchmesser von 1 bis 500 μm, vorzugsweise von 10 bis 100 μm. Sie sind beispielsweise aus der DE-OS 2 657 334 sowie ferner der DE-OS 3 333 185 und der EP-PS 0 056 771 bekannt und im Handel erhältlich. Nach den Angaben der EP-PS 0 056 771 können derartige oberflächenmodifizierte Mikroglaskugeln zur Verbesserung der Reflektion von Fahrbahnmarkierungen eingesetzt werden. Bei ihrer Herstellung werden die Glaskugeln z.B. mit Silanen behandelt, die reaktive Gruppen der genannten Art, z.B. Aminogruppen, Epoxygruppen oder (Meth)acrylatgruppen aufweisen. Der Anteil an derartigen, an ihrer Oberfläche durch organisch reaktive Gruppen modifizierten Mikroglaskugeln an den radikalisch härtbaren Reaktivklebstoffen beträgt 2 bis 30, vorzugweise 2 bis 20, insbesondere 5 bis 15 Gew.%, bezogen auf die Mischung aus olefinisch ungesättigten Monomeren und kautschukelastischen Polymerisaten.

Die neuen Reaktivklebstoffe enthalten als Hauptbestandteile im allgemeinen in Mengen von 10 bis 90 Gew.%, bezogen auf die Summe der Gewichte von Monomeren und kautschukelastischen Polymerisaten, olefinisch ungesättigte Monomere, die im allgemeinen eine polymerisierbare Doppelbindung enthalten. Von besonderem Interesse als olefinisch ungesättigte Monomere sind monoolefinisch ungesättigte Monomere, die meist in Anteilen von 20 bis 90 Gew.-%, bezogen auf die gesamten olefinisch ungesättigten Monomeren, eingesetzt werden, insbesondere monoolefinisch ungesättigte Carbonsäureester mit 1 bis 40 C-Atomen, wie vor allem Acryl- und Methacrylsäureester von 1 bis 12 C-Atome aufweisenden Alkanolen und Vinylester von 2 bis 12 C-Atomen aufweisenden Monoalkancarbonsäuren. Beispiele hierfür sind vor allem n-Butyl- und Iso-butylacrylat und -methacrylat, 2-Ethyl-acrylat und -methacrylat sowie ferner Methylacrylat und -methacrylat, Ethylacrylat und -methacrylat, n-Propylacrylat, n-Hexylacrylat und -methacrylat sowie n-Octylacrylat und -methacrylat. Geeignete Vinylester sind insbesondere Vinylacetat und Vinylpropionat sowie Vinylbutyrat, Vinylversatat und Vinyllaurat. Als monoolefinisch ungesättigte Monomere kommen, in Mengen von bis zu 50 Gew.% auch vinylaromatische Monomere, wie besonders Styrol, Methylmethacrylat und tert.-Butylacrylat und -methacrylat und/oder Acryl- und/oder Methacrylnitril in Frage. Als olefinisch ungesättigte Monomere in Mengen von bis zu 5 Gew.-%, bezogen auf die gesamten Monomeren, können mit Vorteil auch α,β-monoolefinisch ungesättigte, 3 bis 5 C-Atome aufweisende Mono- und/oder Dicarbonsäuren, wie besonders Acryl- und Methacrylsäure sowie Itakonsäure und ferner Maleinsäure und Fumarsäure sowie deren Amide eingesetzt werden. Auch ist es in manchen Fällen von Vorteil, in Mengen von oft 1 bis 40 Gew.%, bezogen auf die gesamten Monomeren, mehrfach olefinisch ungesättigte Monomere, insbesondere diolefinisch ungesättigte Monomere von der Art des Allylacrylats und -methacrylats, und der Acrylsäure- und -methacrylsäureester von 2 bis 8 C-Atomen enthaltenden Alkandiolen, wie Ethylenglykoldiacrylat und -dimethacrylat, 1,4-Butandiol--diacrylat und -dimethacrylat sowie 1,6-Hexandioldiacrylat und -dimethacrylat eingesetzt werden. Ferner in untergeordneten Mengen geeignete olefinisch ungesättigte Monomere sind z.B. Monoester der Acryl-und Methacrylsäure mit Alkandiolen der genannten Art, z.B. β-Hydroxyethylacrylat sowie Acyrlsäure- und Methacrylsäureester des Glycerins mit 1 bis 3 (Meth)acrylatgruppen.

Als kautschukelastische Polymerisate, die in den olefinisch ungesättigten Monomeren löslich oder dispergierbar sind, kommen die hierfür oben aufgeführten Produkte in Betracht, von denen für die neuen radikalisch härtbaren Reaktivklebstoffe kautschukelastische Butadien-Copolymerisate vorgezogen werden, die 10 bis 60 % ihres Gewichtes Acrylnitril und/oder Styrol sowie bis zu 5 Gew.-% 3 bis 5 C-Atome enthaltende monoolefinisch ungesättigte Mono- und/oder Dicarbonsäuren und/oder Amide der oben genannten Art, einpolymerisiert enthalten. Zusätzlich zu den kautschukelastischen Polymerisaten können die neuen radikalisch härtbaren Reaktivklebstoffe auch in Mengen bis zu 40 Gew.-%, bezogen auf die Menge an olefinisch ungesättigten Monomeren und kautschukelastischen Polymerisaten andere Homo- und Copolymerisate enthalten, z.B. Polystyrol, Polyvinylacetat, Polyether, Polyvinylbutyral, Polymethacrylsäuremethylester oder Copolymerisate aus Methacrylsäuremethylester und Acrylnitril. Derartige Polymerisate, die nicht kautschukelastisch sind, können in den neuen radikalisch härtbaren Reaktivklebstoffen, vorzugsweise in Mengen unter 30 Gew.-%, bezogen auf die Menge an olefinisch ungesättigten Monomeren und kautschukelastischen Polymerisaten vorliegen.

Als radikalbildende Polymerisationsinitiatoren kommen alle bekannten Systeme in Betracht, beispielsweise Acylperoxide, wie Dibenzoylperoxid, Dilauroylperoxid und Didecanoylperoxid, Hydroperoxide, wie Cumolhydroperoxid, Methylethylketonperoxid, Cyclohexanonperoxid oder Acetylacetonperoxid und Perester, wie tert.-Butylpermaleinat, tert.-Butylperbenzoat, tert.-Anylpervialat oder tert.-Butylperpivalat.

Derartige Systeme werden meist durch Reduktionsmittel, z.B. tert.-aromatische Amine, Schiff'sche Basen, Verbindungen mit Enolgruppierungen oder Verbindungen von Übergangsmetallen bei Raumtemperatur zur Radikalbildung angeregt.

Beim Einsatz der neuen radikalisch härtbaren Reaktivklebstoffe werden die Komponenten im allgemeinen durch intensives Rühren ineinander gelöst bzw. homogenisiert und das Gemisch dann auf das zu verklebende Substrat in an sich üblicher Weise aufgetragen, die zu verbindenden Substrate miteinander verbunden und die Klebstoffhärtung in an sich üblicher Weise eingeleitet. Dabei können auch die üblichen, z.B. oben angegebenen, Füllstoffe in den üblichen Mengen mitverwendet werden. Die dabei erhaltenen Verklebungen zeichnen sich durch besonders hohe Zugscherfestigkeit bei gleichzeitiger Steigerung der Rollenschälfestigkeit gegenüber Klebstoffverbindungen solcher vergleichbarer Reaktivklebstoffe aus, die keine oder unmodifizierte Glaskugeln enthalten.

Die in den folgenden Beispielen genannten Teile und Prozente beziehen sich auf das Gewicht. Die darin angegebenen Zugscherfestigkeiten sind Mittelwerte aus je 5 Einzelmessungen.

Beispiel 1

Unter kräftigem Rühren homogenisiert man
50,5 Teile Methacrylsäuremethylester
40 Teile Methacrylsäure
20 Teile eines handelsüblichen kautschukelastischen Butadiencopoly-merisats, das ca. 20 % seines Gewichts Acrylnitril einpolymerisiert enthält und eine Mooney-Viskosität von 55 bei 100 °C aufweist
10 Teile Stearylmethacrylat
2 Teile 1,4-Butandioldimethacrylat
15 Teile eines vinylterminierten Butadiencopolymerisats, das 16 % Gewichts Acrylnitril einpolymerisiert enthält und eine Brookfield-Viskosität von 250 000 mPas aufweist.
10 Teile oligomeren, alipahtischen Isocyanats
0,5 Teile Saccharin
10 Teile mit Aminogruppen oberflächenmodifizierte Microglaskugeln
(Typ 5000 CP03 der Fa. Potters-Ballotini)

Zu dem Gemisch werden 2 %, bezogen auf das Gemisch, N,N-Dimethylanilin und 0,2 % Cobaltnaphthenat gegeben und die Mischung auf Fügeteile, die zuvor mit einer 10 %igen Lösung von tert.-Butylperbenzoat in Aceton bestrichen wurden, aufgetragen.

Die an Stahl/Stahl-Verklebungen ermittelte Zugscherfestigkeit beträgt 43 MPa für den bei Raumtemperatur gehärteten Verbund, 48 MPa für den bei 150 °C nachgetemperten Verbund.

Vergleichsversuch 1

Man arbeitet wie in Beispiel 1 angegeben, gibt jedoch keine Glaskugeln zu. Man erhält eine Verklebung der Zugscherfestigkeit bei Raumtemperaturhärtung von nur 28 MPa und der Zugscherfestigkeit bei Nachtemperung (150 °C) von nur 34 MPa.

Beispiel 2

Man homogenisiert unter kräftigem Rühren:
25 Teile Methacrylsäuremethylester
40 Teile Methacrylsäure
20 Teile des in Beispiel 1 angegebenen kautschukelastischen Butadien-Acrylnitril-Copolymerisats
6 Teile 1,4-Butandioldimethacrylat
25 Teile ethoxyliertes Bisphenol-A-dimethacrylat
0,5 Teile Saccharin
10 Teile mit Epoxidgruppen oberflächenmodifizierte Glaskugeln
(Typ 5000 CP05, Fa. Potters-Ballotini)

Man arbeitet wie in Beispiel 1 angegeben weiter und erhält eine Verklebung der Zugscherfestigkeit nach Heißhärtung (2 Stunden bei 150 °C) von 47 MPa.

Vergleichsversuch 2

Man arbeitet nach den Angaben von Beispiel 2, setzt jedoch statt oberflächenmodifizierter Glaskugeln unmodifizierte Glaskugeln ein. Erhalten wird eine Verklebung der Zugscherfestigkeit von 33 MPa.

Beispiel 3

Man homogenisiert unter kräftigem Rühren:
50,5 Teile Methacrylsäuremethylester
40 Teile Methacrylsäure
20 Teile des in Beispiel 1 angegebenen Butadien-Acrylnitril-Copolymerisats
10 Teile Stearylmethacrylat
2 Teile 1,4-Butandioldimethacrylat
15 Teile eines aliphatischen Vinylesters des Molekulargewichts 800
0,5 Teile Saccharin
10 Teile mit Acrylgruppen oberflächenmodifizierte Glaskugeln
(Typ 5000 CP01 der Fa. Potters-Ballotini)

Im übrigen verfährt man wie in Beispiel 1 angegeben und erhält eine Verklebung einer Zugscherfestigkeit von 33 MPa (nach Raumtemperaturhärtung) bzw. von 34 MPa (nach Temperung bei 150 °C)(.

Vergleichsversuch 3

Man arbeitet wie in Beispiel 3 angegeben, verwendet aber statt oberflächenmodifizierter Glaskugeln unmodifizierte Glaskugeln (Typ 5000 Fa. Potters-Ballotini). Erhalten wird eine Verklebung einer Zugscherfestigkeit von 14 MPa (nach Raumtemperaturhärter) bzw. von 10 MPa (nach Temperung bei 150 °C).

Beispiel 4

Man homogenisiert unter kräftigem Rühren:

15 Teile eines Reaktionsproduktes aus stöchiometrischen Anteilen Glycidylmethacrylat und Phthalsäureanhydrid

20 Teile des in Beispiel 1 angegebenen Butadien-Acrylnitril-Copolymerisats

50,5 Teile Methacrylsäuremethylester

40 Teile Methacrylsäure

0,5 Teile Saccharin

2 Teile Butandioldimethacrylat und

10 Teile mit Aminogruppen oberflächenmodifizierte Glaskugeln

(Typ 5000 CP03 der Fa. Potters-Ballotini)

Man arbeitet entsprechend den Angaben in Beispiel 1 weiter und erhält eine Verklebung einer Zugscherfestigkeit von 38 MPa (nach Raumtemperturhärung) bzw. von 51 MPa (nach Temperung bei 150 °C).

Vergleichsversuch 4

Man arbeitet wie in Beispiel 4 angegeben, setzt jedoch an Stelle der mit Aminogruppen oberflächenmodifizierten Glaskugeln unmodifizierte Glaskugeln (Typ 5000 der Fa. Potters-Ballotini) ein. Erhalten wird eine Verklebung einer Zugscherfestigkeit von 30 MPa (nach Raumtemperaturhärtung) bzw. von 46 MPa (nach Temperung bei 150 °C).

**Ansprüche**

1. Radikalisch härtbare Reaktivklebstoffe auf Basis von olefinisch ungesättigten Monomeren, darin löslichen oder dispergierbaren kautschukelastischen Polymerisaten und radikalbildenden Polymerisationsinitiatoren, gekennzeichnet durch einen Gehalt an Mikroglaskugeln, die an ihrer Oberfläche durch organische reaktive Gruppen modifiziert sind.

2. Radikalisch härtbare Reaktivklebstoffe nach Anspruch 1, dadurch gekennzeichnet, daß es sich bei den reaktiven Gruppen um Aminogruppen handelt.

3. Radikalisch härtbare Reaktivklebstoffe nach Anspruch 1, dadurch gekennzeichnet, daß es sich bei den reaktiven Gruppen um Epoxygruppen handelt.

4. Radikalisch härtbare Reaktivklebstoffe nach Anspruch 1, dadurch gekennzeichnet, daß es sich bei den reaktiven Gruppen um (Meth)acrylat- und/oder Carboxyl- und/oder Hydroxyl- und/oder Thiolgruppen handelt.